# FASCICULE DE BREVET EUROPEEN

(11) **EP 3 041 391 B1**
(45) Date de publication et mention de la délivrance du brevet: **22.05.2019**
(21) Numéro de dépôt: 14777695.9
(22) Date de dépôt: 03.09.2014
(51) Int. Cl.: A47J 36/02, A47J 37/10

(54) **CALOTTE D'UN RÉCIPIENT DE CUISSON COMPORTANT UN SUPPORT MUNI D'UN DISPOSITIF ÉLECTRIQUE**
SCHÜSSEL EINES GARBEHÄLTERS MIT EINER HALTERUNG VERSEHEN MIT EINER ELEKTRISCHEN VORRICHTUNG
BOWL OF A COOKING CONTAINER COMPRISING A MOUNTING PROVIDED WITH AN ELECTRIC DEVICE

(30) Priorité: 06.09.2013 FR 1358550
(43) Date de publication de la demande: 13.07.2016
(73) Titulaire: SEB S.A., 69130 Ecully (FR)
(72) Inventeur: LINGLIN, Benoît, F-74370 Saint Martin Bellevue (FR)
(74) Mandataire: Bourrières, Patrice
(86) Numéro de dépôt international: PCT/FR2014/052174
(87) Numéro de publication internationale: WO 2015/033060

(56) Documents cités:
- EP-A1- 0 931 495
- EP-A1- 2 361 538
- GB-A- 1 548 406

## Description

La présente invention concerne un récipient de cuisson destiné à être disposé sur une plaque de cuisson, un brûleur ou analogue pour la cuisson d'aliments notamment une poêle, une casserole, une sauteuse, un faitout ou un autocuiseur, plus particulièrement un récipient de cuisson muni d'une calotte comportant un dispositif électrique.

On connaît du document EP0931495 un récipient de cuisson comportant un fond et une paroi latérale, un dispositif électrique comprenant un capteur de température et deux fils conducteurs intégrés dans le fond et reliés à un circuit électronique pour traiter la grandeur mesurée et afficher la température. Le capteur de température et les deux fils conducteurs sont agencés dans une rainure réalisée dans le fond du récipient de cuisson, une plaque perforée étant fixée par frappe à froid sur le fond. Ainsi, le capteur de température est positionné entre la plaque perforée et le fond.

La réalisation d'un tel récipient de cuisson nécessite de profondes remises en cause des process de fabrication d'un récipient de cuisson standard, sans capteur de température. Il est nécessaire d'ajouter des postes supplémentaires dans le process afin de permettre une bonne préparation à l'intégration de ce dispositif électrique. Et les surcoûts liés aux pièces supplémentaires sont importants.

On connait du document WO 2013/007953 un récipient de cuisson comportant une calotte comprenant un fond, une paroi latérale et un dispositif électrique comportant une bobine de récupération d'énergie, la bobine étant agencée sur la calotte et s'étendant du fond vers la paroi latérale. La bobine est fixée par dépôt à la calotte, notamment par sérigraphie.

La réalisation d'un tel récipient de cuisson nécessite des opérations de reprise de la calotte qui est une pièce volumineuse et ainsi rendent le process de fabrication complexe.

Le but de la présente invention est de remédier aux inconvénients précités et de proposer un récipient de cuisson muni d'un dispositif électrique qui soit de conception simple et économique à mettre en oeuvre.

Un autre but de l'invention est de proposer un récipient de cuisson muni d'un dispositif électrique qui présente un fonctionnement fiable et répétitif, durable dans le temps.

Ces buts sont atteints avec un récipient de cuisson selon la revendication 1, le récipient de cuisson comportant une calotte comprenant un fond, une paroi latérale et un dispositif électrique muni d'au moins un élément conducteur isolé électriquement, l'élément conducteur s'étendant du fond vers la paroi latérale, caractérisé en ce que l'élément conducteur est fixé par dépôt à un support rigide, notamment par sérigraphie, tampographie, projections thermiques, décalcomanie ou frittage laser, le support étant distinct de la calotte. Ainsi, le dispositif électrique est composé de pièces robustes, résistant bien à la chaleur pour permettre un fonctionnement durable dans le temps.

Selon l'invention l'élément conducteur est fixé par dépôt à un support rigide, on comprend que l'élément conducteur n'a pas de rigidité propre avant d'être déposé et solidarisé au support rigide. Avantageusement, l'élément conducteur comporte une poudre métallique qui est fixé au support par un procédé thermique. De manière encore plus avantageuse, la poudre métallique peut être associée à un liant pour former un liquide pâteux qui facilite sa dépose. Dans une variante, la poudre est associée à un liant pour former une piste agencée sur un support temporaire avant son dépôt sur le support rigide.

De préférence, l'élément conducteur est entouré d'une couche isolante formée par un dépôt de matériau résistant à une température supérieure à 350°C, notamment de fritte de verre, de céramique ou d'émail.

Cette disposition permet d'obtenir un dispositif électrique qui supporte les températures élevées et les agressions chimiques des agents lessiviels lors du lavage, notamment dans un lave-vaisselle. De plus, le type de process de réalisation de la couche isolante peut être du même type que le process de réalisation de l'élément conducteur.

Avantageusement, le support présente une perforation munie d'une lèvre périphérique inclinée encastrée dans la matière de la calotte.

Cette disposition permet d'obtenir une fixation du support avec le fond sans pièce ajoutée, donc très économique. De plus une telle fixation est durable dans le temps et très compacte.

Avantageusement, l'encastrement de la lèvre périphérique inclinée dans le fond est réalisé par une opération de sertissage.

Cette disposition permet de réaliser la fixation du support dans le fond par une opération extrêmement économique. De plus, cette opération de sertissage peut être réalisée en fin de process de réalisation de la calotte. Ainsi, la calotte peut recevoir le plus tard possible le dispositif électrique.

De préférence, le support est réalisé en un matériau non ferromagnétique, notamment un inox austénitique.

Cette disposition permet, lors d'une utilisation du récipient de cuisson avec un moyen de chauffage par induction, d'obtenir un support qui ne couple pas avec le moyen de chauffage par induction et donc qui ne chauffe pas.

Avantageusement, la calotte comporte un logement de réception du support permettant d'obtenir une surface du fond plane.

Cette disposition permet à la surface du fond de coopérer correctement avec un moyen de chauffage présentant une surface de pose plane.
Avantageusement, le dispositif électrique comporte un capteur et/ou une bobine de récupération d'énergie destinée à coopérer avec un moyen de chauffage par induction.
Cette disposition permet d'optimiser le cout de fabrication en utilisant un même support pour un dispositif électrique comportant une ou deux fonctions différentes, notamment une fonction mesure et une fonction alimentation en énergie.

De préférence, le capteur est un capteur de température, relié électriquement aux éléments conducteurs.
Cette disposition permet de réaliser un sous-ensemble sonde de température de manière très économique.
Avantageusement, le capteur de température est une CTN ou un thermocouple. Par CTN, on comprend une thermistance à Coefficient de Température Négatif.

De préférence, le récipient de cuisson est une poêle, une casserole, une sauteuse, un faitout ou un autocuiseur. Le récipient de cuisson est destiné à être disposé sur une plaque de cuisson qui est indépendante du récipient de cuisson pour la cuisson d'aliments.

L'invention concerne également un procédé pour fabriquer une calotte d'un récipient de cuisson selon la revendication 13, la calotte étant formée d'au moins une couche métallique et étant adaptée pour recevoir des aliments, le procédé comprenant une étape de mise en forme creuse de la calotte, de manière qu'il présente alors un fond et une paroi latérale qui se dresse en périphérie du fond, caractérisé en ce qu'après l'étape de mise en forme creuse, un support rigide est fixé sur la calotte, le support comportant un dispositif électrique comprenant un élément conducteur fixé par dépôt au support rigide, notamment par sérigraphie, tampographie, projections thermiques, décalcomanie ou frittage laser.

Ainsi, le support muni du dispositif électrique peut être fabriqué comme un sous ensemble, indépendamment du process de fabrication de la calotte. En conséquence, le process de fabrication de la calotte du récipient de cuisson est proche du process de fabrication de la calotte d'un récipient de cuisson standard.

Avantageusement, le support est fixé à la calotte par une opération de sertissage.

De préférence, le support est fixé à la calotte après au moins une des étapes suivantes : une étape de sertissage par frappe d'une plaque perforée sur le fond, une étape de traitement de surface de la calotte, notamment un sablage, et/ou une étape de dépose d'un revêtement par sérigraphie ou par pulvérisation, une étape de finition de la calotte, notamment une opération de rognage ou une opération de polissage.

Ainsi, la fixation du support sur la calotte sera effectuée le plus tard possible dans le process de réalisation de la calotte, de préférence après la dernière opération.

L'invention sera mieux comprise à l'étude des modes de réalisation pris à titre nullement limitatif et illustrés dans les figures annexées dans lesquelles :
- La figure 1 illustre une vue en perspective d'un support selon un premier mode particulier de réalisation de l'invention.
- La figure 2 illustre une vue en perspective d'une calotte d'un récipient de cuisson muni du support de la figure 1.
- La figure 3a illustre une vue de détail en coupe de la calotte de la figure 2 suivant la ligne III-III, le support étant représenté non serti.
- La figure 3b illustre une vue de détail en coupe de la calotte de la figure 2 suivant la ligne III-III, le support étant représenté serti.
- La figure 4 illustre une vue en perspective d'un support selon un second mode particulier de réalisation de l'invention, la face externe étant visible.
- La figure 5 illustre une vue en perspective d'un support de la figure 4, la face interne étant visible.
- La figure 6 illustre une vue en perspective d'une calotte d'un récipient de cuisson muni du support de la figure 4.

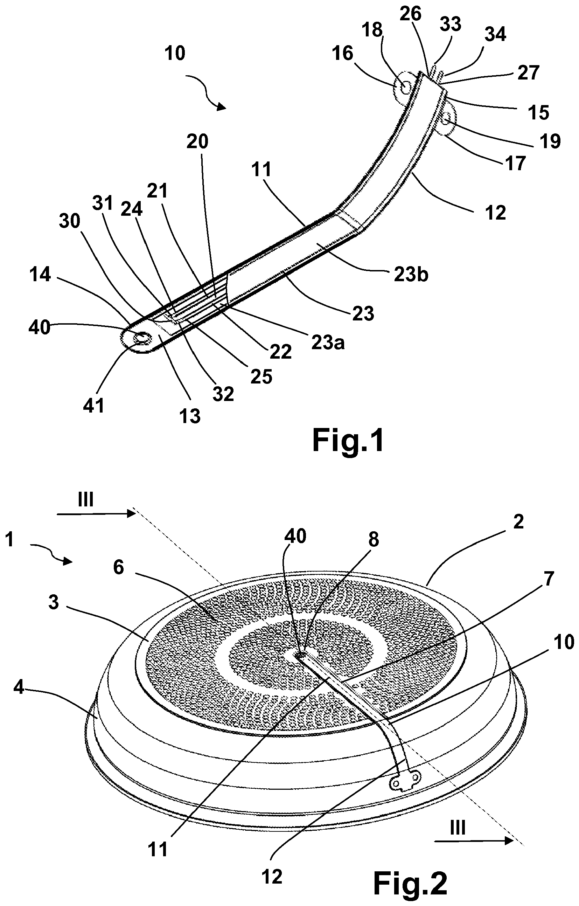

Selon un premier mode de réalisation visible aux figures 1 et 2, un récipient de cuisson 1 comporte une calotte 2 comprenant un fond 3 et une paroi latérale 4. La calotte 2 comporte un support 10 rigide, distinct de la calotte 2, sur lequel est agencé un dispositif 20 électrique de mesure de température. Par un support 10 distinct de la calotte 2, on comprend que le support 10 et la calotte 2 sont deux pièces différentes. Le support 10 est constitué par une lame métallique de section rectangulaire sensiblement constante dont la largeur est comprise entre 5 et 30 millimètres et dont l'épaisseur et comprise entre 0,3 et 3 millimètres. Avantageusement, le matériau dans lequel est réalisé le support 10 est un acier inoxydable, de préférence austénitique. Le support 10 s'étend radialement, sensiblement depuis le centre du fond 3 vers la paroi latérale 4. Le support 10 comporte une portion droite 11 épousant la forme du fond 3 et une portion recourbée 12 vers le haut épousant la forme de la paroi latérale 4.

La calotte 2 comporte une plaque perforée 6 fixée par frappe sur le fond 3. Le fond 3 et la paroi latérale 4 comporte un logement 7 réalisé également par frappe, de préférence lors de l'opération de sertissage de la plaque perforée 6 sur le fond 3. Le logement 7 présente une forme adaptée à recevoir le support 10, en particulier la portion droite 11 dans le fond 3 et la portion recourbée 12 dans la paroi latérale 4. Le support 10 se positionne dans le logement 7, notamment pour que le fond 3 présente une surface plane destinée à être posée sur le plan de pose d'un moyen de chauffage.

Le dispositif 20 de mesure de température comporte un capteur 30 de température et deux éléments conducteurs 21, 22 isolés électriquement par une couche isolante 23. Les éléments conducteurs 21, 22 et la couche isolante 23 sont fixés sur le support 10 par dépôt, notamment par sérigraphie. D'autres procédés sont envisageables, par exemple par projections thermiques, décalcomanie ou frittage laser. Les éléments conducteurs 21, 22 comportent deux premières extrémités 24, 25 reliées électriquement à deux éléments de connexion 31, 32 du capteur 30 et deux secondes extrémités 26, 27 reliés à deux connecteurs rigides 33, 34. Les connecteurs rigides 33, 34 sont destinés à être reliés électriquement avec un circuit de contrôle agencé, par exemple, dans une poignée (non représentés sur les figures). Le circuit de contrôle peut comporter, par exemple, des moyens de traitement et d'affichage et/ou de moyens de communication avec un moyen de chauffage.

Le support 10 muni du dispositif 20 de mesure de température peut être réalisé comme un sous-ensemble. Le support 10 est découpé dans un feuillard puis mis en forme par frappe. Le support 10 présente une face interne 13 sur laquelle on dépose une première partie 23a de la couche isolante 23, par exemple une fritte de verre. On dépose ensuite les deux éléments conducteurs 21, 22, par exemple des frittes à base d'argent. Après avoir reportés le capteur 30 et les connecteurs rigides 33, 34, on dépose une deuxième partie 23b de la couche isolante 23.

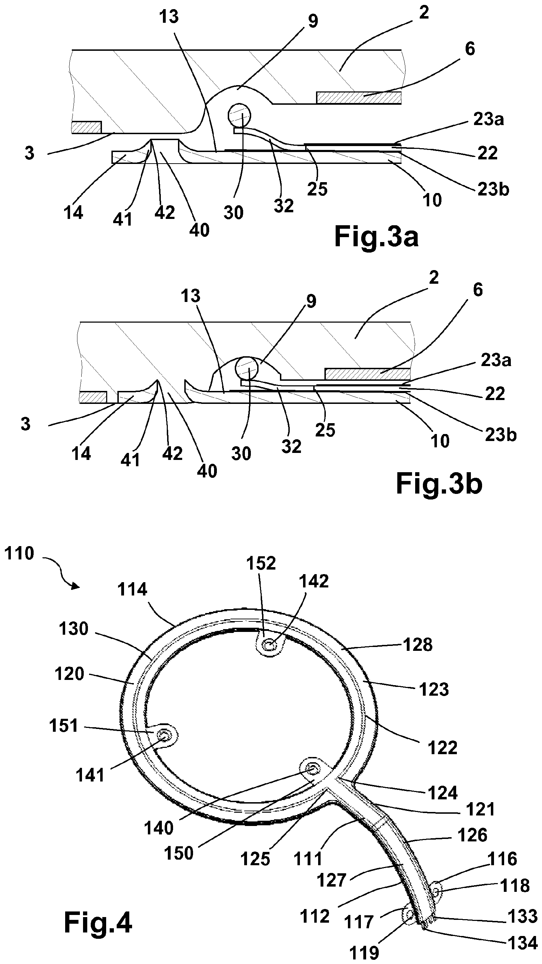

Tel que visible aux figures 1, 2, 3a et 3b, le support 10 comporte une première extrémité 14 qui est façonnée pour comporter une perforation 40 circulaire qui présente une lèvre 41 périphérique de forme conique et une extrémité de lèvre 42. La figure 3a illustre la première extrémité 14 du support 10 ainsi façonnée agencée face au fond 3 avant fixation. La lèvre 41 de la perforation 40 forme une proéminence dirigée vers le fond 3. La plaque perforée 6 comporte une ouverture 8 ménagée en vis à vis du capteur de température 30 et de la perforation 40. Le fond 3 comporte une cavité 9 de réception du capteur de température 30 agencée dans l'ouverture 8. La figure 3b illustre la première extrémité 14 du support 10 sertie par matriçage dans le fond 3. Lors du sertissage, la lèvre 41 pénètre dans la matière du fond 3 qui flue dans la perforation 40 pour réaliser un ancrage de la première extrémité 14 dans le fond 3.

Le capteur de température 30 est agencé dans la cavité 9. Les deux éléments de connexion 31, 32 du capteur de température 30 reliés aux deux premières extrémités 24, 25 des éléments conducteurs 21, 22, peuvent être réalisés par deux lames métalliques souples qui forment des moyens de maintien en appui du capteur de température 30 contre le fond 3, une fois la première extrémité 14 du support 10 sertie dans le fond.

Le support 10 comporte une deuxième extrémité 15 qui comprend deux excroissances 16, 17 latérales. Chaque excroissance 16, 17 comporte une perforation 18, 19 qui peut être façonnée de manière identique à la perforation 40 pour permettre la fixation de la deuxième extrémité 15 à la paroi latérale 4 de la calotte 2.

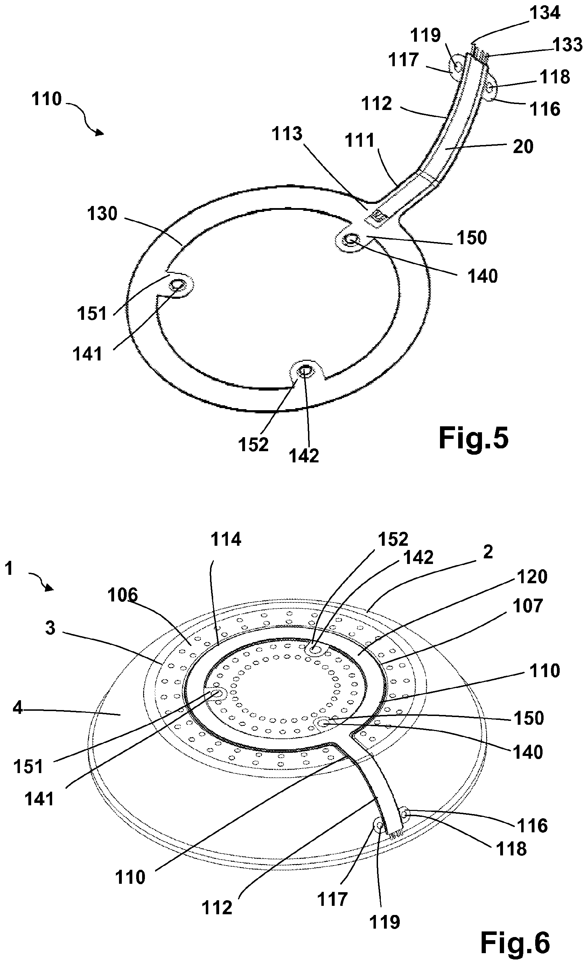

Les figures 4 à 6 illustrent un support 110 selon un second mode de réalisation. Le support 110 présente une partie annulaire 114 agencée de manière concentrique avec le fond 3, une partie droite 111 latérale à la partie annulaire 114 s'étendant radialement sur le fond 3 et une partie recourbée 112 s'étendant sur la paroi latérale 4. Le support 110 comporte une face externe 128 sur laquelle est agencé un dispositif 120 électrique de récupération d'énergie. Le dispositif 120 électrique de récupération d'énergie est destiné à coopérer avec un moyen de chauffage par induction et avec un récipient de cuisson 1 compatible avec un tel moyen de chauffage par induction. Le dispositif 120 comporte une bobine 130 générant de l'électricité à partir d'un champ magnétique produit par le moyen de chauffage par induction lorsque la bobine 130 est agencée sur le moyen de chauffage. L'électricité générée par la bobine 130 permet d'alimenter un dispositif électrique et/ou électromécanique agencé sur le récipient de cuisson (non représenté sur les figures).
Le dispositif 120 comporte un élément conducteur 121 présentant une boucle 122 ouverte munie de deux extrémités 124, 125 depuis lesquelles s'étendent radialement deux portions latérales 126, 127. La boucle 122 ouverte est agencée sur la partie annulaire 114 et les portions latérales 126, 127 sur la partie droite 111 et la partie recourbée 112. L'élément conducteur 121 est isolé électriquement par une couche isolante 123. L'élément conducteur 121 et la couche isolante 123 sont fixés sur le support 110 par dépôt. Les portions droites 126, 127 comportent deux extrémités reliées à deux connecteurs rigides 133, 134. Le support 110 muni du dispositif 120 de récupération d'énergie peut être réalisé comme un sous ensemble suivant un process identique au process de réalisation du support 10 muni du dispositif 20 de mesure de température.
Tel que visible à la figure 5, le support 110 comporte une face interne 113 sur laquelle est agencé le dispositif 20 de mesure de température. Le dispositif 20 de mesure de température est agencé sur la partie droite 111 et la partie recourbée 112.

Tel que visible à la figure 6, le fond 3 comporte une plaque perforée 106, fixée par frappe. La plaque perforée 106 est réalisée en inox ferromagnétique pour assurer la compatibilité avec le moyen de chauffage par induction. Le fond 3 et la paroi latérale 4 comporte un logement 107 réalisé également par frappe, de préférence lors de l'opération de sertissage de la plaque perforée 106 sur le fond 3. Le logement 107 présente une forme adaptée à recevoir le support 110.

La partie annulaire 114 du support 110 comporte trois excroissances internes 150, 151, 152 agencés à 120°, comportant chacune une perforation 140, 141, 142. Les perforations 140, 141, 142 sont façonnées de manière identique à la perforation 40 pour permettre la fixation par sertissage de la partie annulaire 114 du support 110 dans le logement 107.

Le support 110 comporte à l'extrémité de la partie recourbée 112 deux excroissances 116, 117 latérales. Chaque excroissance 116, 117 comporte une perforation 118, 119 qui peut être façonnée de manière identique à la perforation 40 pour permettre la fixation de la partie recourbée 112 à la paroi latérale 4 de la calotte 2.

En fonctionnement, l'utilisateur pose sur le moyen de chauffage la calotte 2 du récipient de cuisson 1. Dans le premier mode de réalisation, la calotte 2 comporte le support 10 muni du dispositif 20 de mesure de température. Le récipient de cuisson 1 peut comporter une poignée (non représentée sur les figures) qui comprend un circuit de contrôle incorporant des moyens de traitement et d'affichage de la température. L'utilisateur met en marche le moyen de chauffage qui chauffe la calotte 2 et le capteur de température 30, par exemple une CTN dont la résistance varie. Cette variation est transmise par les éléments conducteurs 21, 22 au dispositif de contrôle qui calcule et indique à l'utilisateur la température à l'aide des moyens d'affichage. Une fois la température de préchauffage atteinte, l'utilisateur place des aliments à cuire dans la calotte 2. Le circuit de contrôle peut comporter des moyens de communication avec le moyen de chauffage qui permet de réguler l'alimentation du moyen de chauffage lorsqu'une température de consigne détectée par le circuit de contrôle est atteinte.

Dans le second mode de réalisation, le support 110 comporte le dispositif 120 électrique de récupération d'énergie. En fonctionnement, l'utilisateur pose sur le moyen de chauffage par induction la calotte 2. L'utilisateur met en marche le moyen de chauffage par induction. La bobine 130 placée dans le champ magnétique généré par le moyen de chauffage par induction fournit alors un courant transmis au dispositif électrique ou électromagnétique agencé sur le récipient de cuisson 1.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, les deux excroissances latérales de la deuxième extrémité du support comportent chacune une perforation qui coopèrent avec deux rivets de fixation d'une poignée à la calotte. Ainsi, la deuxième extrémité est fixée à la calotte en étant pincée entre la paroi latérale et la poignée.

## Revendications

1. Récipient de cuisson (1) comportant une calotte (2) comprenant un fond (3), une paroi latérale (4) et un dispositif (20, 120) électrique muni d'au moins un élément conducteur (21, 22, 121) isolé électriquement, ledit élément conducteur (21, 22, 121) s'étendant du fond (3) vers la paroi latérale (4), **caractérisé en ce que** l'élément conducteur (21, 22, 121) n'a pas de rigidité propre avant d'être déposé et solidarisé au support (10, 110) rigide et **en ce que** l'élément conducteur (21, 22, 121) est fixé par dépôt à un support (10, 110) rigide, notamment par sérigraphie, tampographie, projections thermiques, décalcomanie ou frittage laser, ledit support (10, 110) étant distinct de la calotte (2).

2. Récipient de cuisson (1) selon la revendication 1, **caractérisé en ce que** l'élément conducteur (21, 22, 121) est entouré d'une couche isolante (23, 123) formée par un dépôt de matériau résistant à une température supérieure à 350°C, notamment de fritte de verre, de céramique ou d'émail.

3. Récipient de cuisson (1) selon l'une quelconque des revendications précédentes, **caractérisé en ce que** le support (10, 110) présente une perforation (40, 150, 151, 152) munie d'une lèvre (41) périphérique inclinée encastrée dans la matière de la calotte (2).

4. Récipient de cuisson (1) selon la revendication 3, **caractérisé en ce que** l'encastrement de la lèvre (41) périphérique inclinée dans le fond (3) est réalisée par une opération de sertissage.

5. Récipient de cuisson (1) selon l'une quelconque des revendications précédentes, **caractérisé en ce que** le support (10, 110) est réalisé en un matériau non ferromagnétique, notamment un inox austénitique.

6. Récipient de cuisson (1) selon l'une quelconque des revendications précédentes, **caractérisé en ce que** la calotte (2) comporte un logement (7, 107) de réception du support (10, 110) permettant d'obtenir une surface du fond (3) plane.

7. Récipient de cuisson (1) selon l'une quelconque des revendications précédentes, **caractérisé en ce que** ce le dispositif (20, 120) électrique comporte un capteur (30) et/ou une bobine (130) de récupération d'énergie destinée à coopérer avec un moyen de chauffage par induction.

8. Récipient de cuisson (1) selon la revendication 7, **caractérisé en ce que** le capteur est un capteur (30) de température, relié électriquement aux éléments conducteurs (21, 22).

9. Récipient de cuisson (1) selon la revendication 8, **caractérisé en ce que** le capteur (30) de température est une CTN ou un thermocouple.

10. Récipient de cuisson (1) selon l'une des revendications 1 à 9, **caractérisé en ce qu'**il est une poêle, une casserole, une sauteuse, un faitout ou un autocuiseur.

11. Procédé pour fabriquer une calotte (2) d'un récipient de cuisson (1), la calotte (2) étant formée d'au moins une couche métallique et étant adaptée pour recevoir des aliments, le procédé comprenant une étape de mise en forme creuse de la calotte (2), de manière qu'il présente alors un fond (3) et une paroi latérale (4) qui se dresse en périphérie du fond (3), **caractérisé en ce qu'**après l'étape de mise en forme creuse, un support (10, 110) rigide est fixé à la calotte (2), ledit support comportant un dispositif (20, 120) électrique comprenant un élément conducteur (21, 22, 121) fixé par dépôt au support (10, 110) rigide, notamment par sérigraphie, tampographie, projections thermiques, décalcomanie ou frittage laser et **en ce que** l'élément conducteur (21, 22, 121) n'a pas de rigidité propre avant d'être déposé et solidarisé au support (10, 110) rigide.

12. Procédé pour fabriquer une calotte (2) d'un récipient de cuisson (1) selon la revendication 11, **caractérisé en ce que** le support (10, 110) est fixé à la calotte par une opération de sertissage.

13. Procédé pour fabriquer une calotte (2) d'un récipient de cuisson (1) selon la revendication 11 ou 12, **caractérisé en ce que** le support (10, 110) est fixé à la calotte après au moins une des étapes suivantes : une étape de sertissage par frappe d'une plaque perforée sur le fond, une étape de traitement de surface de la calotte, notamment un sablage, et/ou une étape de dépose d'un revêtement par sérigraphie ou par pulvérisation, une étape de finition de la calotte, notamment une opération de rognage ou une opération de polissage.

## Patentansprüche

1. Kochgefäß (1), aufweisend eine Haube (2), die einen Boden (3), eine Seitenwand (4) und eine elektrische Vorrichtung (20, 120) umfasst, die mit mindestens einem leitfähigen Element (21, 22, 121), das elektrisch isoliert ist, versehen ist, wobei sich das leitfähige Element (21, 22, 121) von dem Boden (3) zu der Seitenwand (4) erstreckt, **dadurch gekennzeichnet, dass** das leitfähige Element (21, 22, 121) keine eigene Steifigkeit hat, bevor es abgeschieden und an dem steifen Träger (10, 110) fest verbunden wird, und dass das leitfähige Element (21, 22, 121) durch Abscheidung an einem steifen Träger (10, 110), insbesondere durch Siebdruck, Tampondruck, thermisches Spritzen, Abziehbild oder Lasersintern, befestigt ist, wobei sich der Träger (10, 110) von der Haube (2) unterscheidet.

2. Kochgefäß (1) nach Anspruch 1, **dadurch gekennzeichnet, dass** das leitfähige Element (21, 22, 121) von einer Isolierschicht (23, 123) umgeben ist, die durch eine Abscheidung eines Materials, das gegenüber einer Temperatur von mehr als 350 °C beständig ist, insbesondere Glasfritte, Keramik oder Email, gebildet ist.

3. Kochgefäß (1) nach einem der vorhergehenden Ansprüche, **dadurch gekennzeichnet, dass** der Träger (10, 110) eine Perforation (40, 150, 151, 152) aufweist, die mit einer geneigten Umfangslippe (41) versehen ist, die in dem Material der Haube (2) eingebaut ist.

4. Kochgefäß (1) nach Anspruch 3, **dadurch gekennzeichnet, dass** der Einbau der geneigten Umfangslippe (41) in dem Boden (3) durch eine Crimpoperation hergestellt ist.

5. Kochgefäß (1) nach einem der vorhergehenden Ansprüche, **dadurch gekennzeichnet, dass** der Träger (10, 110) aus einem nicht ferromagnetischen Material, insbesondere aus einem austenitischen rostfreien Stahl, hergestellt ist.

6. Kochgefäß (1) nach einem der vorhergehenden Ansprüche, **dadurch gekennzeichnet, dass** die Haube (2) ein Gehäuse (7, 107) zum Aufnehmen des Trägers (10, 110) aufweist, das es ermöglicht, eine flache Bodenfläche (3) zu erhalten.

7. Kochgefäß (1) nach einem der vorhergehenden Ansprüche, **dadurch gekennzeichnet, dass** die elektrische Vorrichtung (20, 120) einen Sensor (30) und / oder eine Spule (130) zur Energierückgewinnung aufweist, die dazu bestimmt ist, mit Induktionsheizmitteln zusammenzuwirken.

8. Kochgefäß (1) nach Anspruch 7, **dadurch gekennzeichnet, dass** der Sensor ein Temperatursensor (30) ist, der elektrisch mit den leitfähigen Elementen (21, 22) verbunden ist.

9. Kochgefäß (1) nach Anspruch 8, **dadurch gekennzeichnet, dass** der Temperatursensor (30) ein CTN oder ein Thermoelement ist.

10. Kochgefäß (1) nach einem der Ansprüche 1 bis 9, **dadurch gekennzeichnet, dass** es eine Pfanne, ein Kochtopf, eine Bratpfanne, ein Schmortopf oder ein Schnellkochtopf ist.

11. Verfahren zum Herstellen einer Haube (2) eines Kochgefäßes (1), wobei die Haube (2) aus mindestens einer Metallschicht gebildet ist und zur Aufnahme von Nahrungsmitteln geeignet ist, wobei das Verfahren einen Hohlformungsschritt der Haube (2) umfasst, so dass sie dann einen Boden (3) und eine Seitenwand (4) aufweist, die am Umfang des Bodens (3) ansteigt, **dadurch gekennzeichnet, dass** nach dem Hohlformungsschritt ein steifer Träger (10, 110) an der Haube (2) befestigt wird, wobei der Träger eine elektrische Vorrichtung (20, 120) aufweist, die ein leitfähiges Element (21, 22, 121) umfasst, das durch Abscheidung an dem steifen Träger (10, 110), insbesondere durch Siebdruck, Tampondruck, thermisches Spritzen, Abziehbild oder Lasersintern, befestigt ist, und dass das leitfähige Element (21, 22, 121) keine eigene Steifigkeit hat, bevor es abgeschieden und mit dem steifen Träger (10, 110) fest verbunden wird.

12. Verfahren zum Herstellen einer Haube (2) eines Kochgefäßes (1) nach Anspruch 11, **dadurch gekennzeichnet, dass** der Träger (10, 110) durch eine Crimpoperation an der Haube befestigt wird.

13. Verfahren zum Herstellen einer Haube (2) eines Kochgefäßes (1) nach Anspruch 11 oder 12, **dadurch gekennzeichnet, dass** der Träger (10, 110) nach mindestens einem der folgenden Schritte an der Haube befestigt wird: einem Schritt des Crimpens durch Stauchen einer perforierten Platte auf den Boden, einem Schritt der Oberflächenbehandlung der Haube, insbesondere ein Sandstrahlen, und / oder einem Schritt des Abscheidens einer Beschichtung durch Siebdruck oder durch Besprühen, einen Endbearbeitungsschritt der Haube, insbesondere eine Beschneidungsoperation oder eine Polieroperation.

## Claims

1. Cooking container (1) comprising a bowl (2) comprising a bottom (3), a side wall (4) and an electric device (20, 120) provided with at least one conductive element (21, 22, 121), electrically insulated, said conductive element (21, 22, 121) extending from the bottom (3) towards the side wall (4), **characterised in that** the conductive element (21, 22, 121) has no specific rigidity before being deposited and secured to the rigid mounting (10, 110) and **in that** the conductive element (21, 22, 121) is secured by deposition to a rigid mounting (10, 110), in particular by screen printing, pad printing, heat projections, decalcomania or laser sintering, said mounting (10, 110) being separate from the bowl (2).

2. Cooking container (1) according to claim 1, **characterised in that** the conductive element (21, 22, 121) is surrounded by an insulating layer (23, 123) formed by a deposition of material, resistant to a temperature greater than 350°C, in particular glass, ceramic or enamel frit.

3. Cooking container (1) according to any one of the preceding claims, **characterised in that** the mounting (10, 110) has a perforation (40, 150, 151, 152) provided with an inclined, peripheral lip (41) embedded in the material of the bowl (2).

4. Cooking container (1) according to claim 3, **characterised in that** the embedding of the inclined, peripheral lip (41) in the bottom (3) is achieved by a crimping operation.

5. Cooking container (1) according to any one of the preceding claims, **characterised in that** the mounting (10, 110) is made of a non-ferromagnetic material, in particular an austenitic stainless steel.

6. Cooking container (1) according to any one of the preceding claims, **characterised in that** the bowl (2) comprises a housing (7, 107) for receiving the mounting (10, 110) making it possible to obtain a surface of the flat bottom (3).

7. Cooking container (1) according to any one of the preceding claims, **characterised in that** the electric device (20, 120) comprises a sensor (30) and/or a coil (130) for recovering energy intended to cooperate with an induction heating means.

8. Cooking container (1) according to claim 7, **characterised in that** the sensor is a temperature sensor (30), electrically connected to the conductive elements (21, 22).

9. Cooking container (1) according to claim 8, **characterised in that** the temperature sensor (30) is a CTN or a thermocouple.

10. Cooking container (1) according to one of claims 1 to 9, **characterised in that** it is a frying pan, a saucepan, a pan, a large pot or a steamer.

11. Method for producing a bowl (2) of a cooking container (1), the bowl (2) being formed of at least one metal layer and being adapted to receive food, the method comprising a step of hollow shaping the bowl (2), such that it thus has a bottom (3) and a side wall (4), which is erected at the periphery of the bottom (3), **characterised in that** after the hollow shaping step, a rigid mounting (10, 110) is secured to the bowl (2), said mounting comprising an electric device (20, 120) comprising a conductive element (21, 22, 121) secured by deposition to the rigid mounting (10, 110), in particular by screen printing, pad printing, heat projections, decalcomania or laser sintering and **in that** the conductive element (21, 22, 121) has no specific rigidity before being deposited and secured to the rigid mounting (10, 110).

12. Method for producing a bowl (2) of a cooking container (1) according to claim 11, **characterised in that** the mounting (10, 110) is secured to the bowl by a crimping operation.

13. Method for producing a bowl (2) of a cooking container (1) according to claim 11 or 12, **characterised in that** the mounting (10, 110) is secured to the bowl after at least one of the following steps: a step of crimping by hitting a perforated plate on the bottom, a step of surface treating the bowl, in particular a sand blasting, and/or a step of depositing a coating by screen printing or by spraying, a step of finishing the bowl, in particular a cropping operation or a polishing operation.
